# EUROPEAN PATENT SPECIFICATION

(11) **EP 4 474 719 B1**
(45) Date of publication and mention of the grant of the patent: **15.04.2026**
(21) Application number: 24180892.2
(22) Date of filing: 07.06.2024
(51) Int. Cl.: F24D 5/12, F24D 19/10, F24H 15/136, F24H 15/227, F24H 15/325, F24H 15/429, F25B 47/02, F28D 21/00

(54) **HEAT PUMP SYSTEM AND WASTE TANK**
WÄRMEPUMPENSYSTEM UND ABFALLTANK
SYSTÈME DE POMPE À CHALEUR ET RÉSERVOIR DE DÉCHETS

(30) Priority: 09.06.2023 CN 202310686562
(43) Date of publication of application: 11.12.2024
(73) Proprietor: Carrier Corporation, Palm Beach Gardens, FL 33418 (US)
(72) Inventor: XU, Hui, Shanghai, 201206 (CN); SHI, Runfu, Shanghai, 201206 (CN)
(74) Representative: Dehns

(56) References cited:
- DE-A1- 2 438 622
- DE-A1- 3 006 119
- US-B2- 6 615 602

## Description

### FIELD OF THE INVENTION

The present invention relates to the field of heat pump devices, and in particular to a wastewater tank and a heat pump system for recovering domestic wastewater and utilizing the residual heat thereof.

### BACKGROUND OF THE INVENTION

For ordinary households, domestic wastewater is generated every day. In winter, the discharged domestic wastewater can still have a temperature of 20-30 °C, which is significantly higher than that of the open air (possibly below zero).

On the other hand, heat pump systems typically operate in the heating mode during winter, with outdoor heat exchangers used as evaporators to absorb heat through evaporation, resulting in temperatures lower than the ambient temperature and thus easily lead to frost formation. Heat pump systems normally have a defrosting mode, typically adjusting a four-way valve to transport refrigerant from the outlet of the compressor to the outdoor heat exchanger for defrosting. However, the defrosting mode will cause interruption of indoor heating and have a significant impact on the performance of the heat pump system.

US 6 615 602 B2 discloses a heat pump including a compressor having an inlet and an outlet, an indoor heat exchanger and an outdoor heat exchanger, and an outdoor thermal expansion valve. DE 30 06 119 A1 discloses a heat exchanger with a heat pump for recovering the thermal energy from warm waste water that has previously been uselessly discharged into the sewer system. DE 24 38 622 A1 discloses a plant for heat recovery from waste water from households, commercial enterprises or the like.

### SUMMARY OF THE INVENTION

The object of the present invention is to solve or at least alleviate the problems existing in the prior art.

According to a first aspect of the present invention, a heat pump system is provided, comprising:
a main circuit connecting a compressor, a first heat exchanger, a throttling element, and a refrigerant pipeline of a second heat exchanger, where when the heat pump system operates in a heating mode, the first heat exchanger serves as a condenser and the second heat exchanger serves as an evaporator;
a wastewater tank for receiving and storing domestic wastewater;
a wastewater heat recovery circuit connecting a driving device, a first heat exchange unit, and a defrosting pipeline of the second heat exchanger, wherein the second heat exchanger is a three-medium fluid heat exchanger, the defrosting pipeline and the refrigerant pipeline are thermally coupled with each other, and the first heat exchange unit is thermally coupled with the wastewater tank;
wherein, the heat pump system has a fast defrosting mode in which the wastewater heat recovery circuit transports residual heat from wastewater in the wastewater tank to the second heat exchanger to accelerate defrosting.

Optionally, a second heat exchange unit is provided in the wastewater tank, where the second heat exchange unit is connected in the main circuit between the first heat exchanger and the throttling element.

Optionally, the heat pump system comprises a first bypass branch in parallel with the second heat exchange unit and a first control valve, wherein the first control valve is configured to selectively pass the refrigerant at the outlet of the first heat exchanger through the second heat exchange unit or the first bypass branch based on the temperature of the domestic wastewater stored in the wastewater tank and the temperature of the refrigerant at the outlet of the first heat exchanger.

Optionally, the wastewater tank comprises a drain path with a relief valve disposed thereon, wherein the relief valve is configured to release a portion of the domestic wastewater when the temperature of the domestic wastewater in the wastewater tank is lower than a first threshold, where the first threshold is between 2 °C and 8 °C.

Optionally, the three-medium fluid heat exchanger comprises a fan to exchange heat with ambient air, where the fan is turned off in the fast defrosting mode.

Optionally, the wastewater heat recovery circuit comprises an electric heater, and the heat pump system also has a continuous heating mode in which the electric heater is activated to heat a heat transfer medium in the wastewater heat recovery circuit.

Optionally, the wastewater heat recovery circuit comprises a second bypass branch in parallel with the first heat exchange unit and a second control valve, wherein the second control valve is configured to selectively pass the heat transfer medium in the wastewater heat recovery circuit through the first heat exchange unit or the second bypass branch based on the temperature of the domestic wastewater stored in the wastewater tank.

Optionally, in the fast defrosting mode, the refrigerant at the outlet of the compressor is transported to the second heat exchanger for defrosting.

Optionally, the heat pump system further comprises a four-way valve configured to switch between a cooling mode and the heating mode, and the heat pump system comprises a high-performance heating mode in which the four-way valve is in the same position as in the heating mode, and the wastewater heat recovery circuit transports the residual heat from the wastewater in the wastewater tank to the second heat exchanger for increasing the evaporation temperature.

The device according to the embodiments of the present invention effectively improves the efficiency of the heat pump system.

### BRIEF DESCRIPTION OF THE DRAWINGS

With reference to the accompanying drawings, the present invention will become easier to understand. Those skilled in the art would easily understand that these drawings are for the purpose of illustration, and are not intended to limit the scope of the present invention, which is as set out in the appended claims. In addition, in the figures, similar numerals are used to denote similar components. Certain exemplary embodiments will now be described in greater detail by way of example only and with reference to the accompanying drawings in which:
FIG. 1 shows a structural schematic diagram of a heat pump system; and
FIG. 2 shows a structural schematic diagram of an exemplary three-medium fluid heat exchanger.

### DETAILED DESCRIPTION OF EMBODIMENT(S) OF THE INVENTION

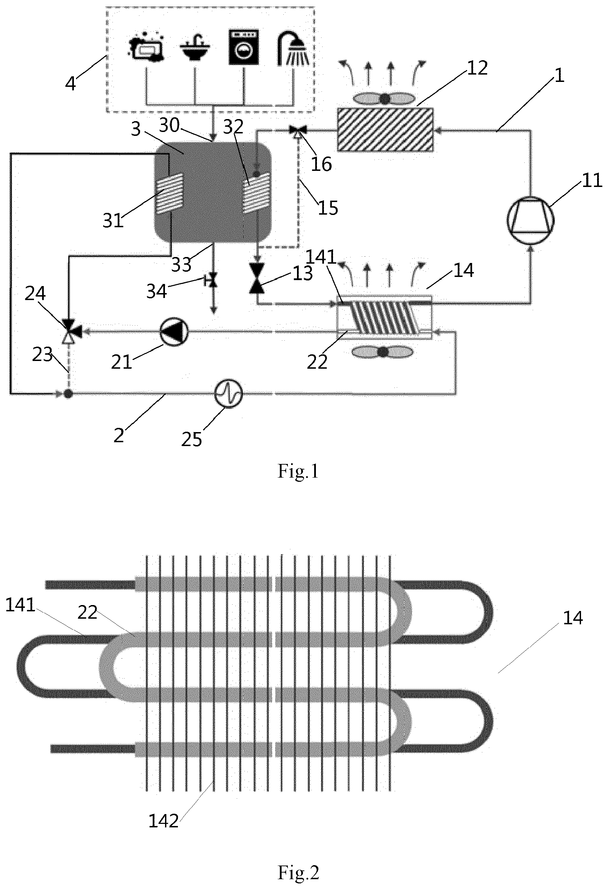

A heat pump system according to an embodiment of the present invention is described referring first to FIG. 1. The heat pump system comprises: a main circuit 1 connecting a compressor 11, a first heat exchanger 12, a throttling element 13, and a refrigerant pipeline 141 of a second heat exchanger 14. The first heat exchanger 12 is, for example, an indoor heat exchanger, while the second heat exchanger 14 is, for example, an outdoor heat exchanger. Although not shown, the heat pump system further comprises a switching component, such as a four-way valve, to switch between the cooling mode and the heating mode. In the diagram shown in FIG. 1, the heat pump system is in the heating mode, with the first heat exchanger 12 connected to the outlet of the compressor 11 to serve as a condenser, and the second heat exchanger 14 connected to the inlet of the compressor 11 to serve as an evaporator. It should be appreciated that in the cooling mode or the conventional defrosting mode, the second heat exchanger 14 is connected to the outlet of the compressor 11 and serves as a condenser.

The heat pump system further comprises a wastewater tank 3 for receiving and storing domestic wastewater. Domestic wastewater is generated from, for example, a wastewater source 4, where the wastewater source 4 can include shower water, washing machine water, washing water, kitchen water, and so on. Although in the embodiment illustrated, the wastewater source 4 is directly connected to the inlet port 30 of the wastewater tank 3, in alternative embodiments, however, a drain path can be arranged between the the wastewater source 4 and the inlet port 30 of the wastewater tank 3 to selectively transport domestic wastewater to the wastewater tank 3 or directly to the drain, which is determined based on, for example, the temperature of the wastewater, the temperature and liquid level of the domestic water stored in the wastewater tank 3, and the like. More specifically, in a simple embodiment, when the temperature of the wastewater exceeds a predetermined value, the wastewater is transported to the wastewater tank 3, otherwise it is directly discharged.

The heat pump system further comprises a wastewater heat recovery circuit 2, which is connecting a driving device 21, a first heat exchange unit 31, and a defrosting pipeline 22 of the second heat exchanger. The driving device 21, the first heat exchange unit 31, and the defrosting pipeline 22 can be connected in series to form a circuit. The first heat exchange unit 31 is thermally coupled with the wastewater tank 3. For example, in the embodiment illustrated, the first heat exchange unit 31 is a coil disposed in the wastewater tank 3 or at least partially disposed in the wastewater tank 3. In addition, the second heat exchanger 14 is a three-medium fluid heat exchanger, including a defrosting pipeline 22 and a refrigerant pipeline 141 thermally coupled with each other. The heat pump system has a fast defrosting mode in which in addition to the refrigerant from the outlet of the compressor being transported to the refrigerant pipeline 141 of the second heat exchanger 14, the wastewater heat recovery circuit 2 transports the residual heat of the waste water from the wastewater tank 3 to the second heat exchanger 14 for accelerating defrosting. Through this arrangement, in the fast defrosting mode, the heat transfer medium (such as water or antifreeze) in the wastewater heat recovery circuit 2 transports the residual heat in the wastewater to the second heat exchanger 14. This is carried out simultaneously with transporting the hot steam at the outlet of the compressor to the second heat exchanger 14 by switching the four-way valve, so as to allow for faster elimination of frost in the second heat exchanger 14, thereby accelerating the defrosting process, saving the time required for defrosting, and improving the efficiency of the heat pump system.

In some embodiments, a second heat exchange unit 32 is further provided in the wastewater tank 3, where the second heat exchange unit 32 is connected in the main circuit 1 between the first heat exchanger 12 and the throttling element 13. This allows for heat exchange between the refrigerant at the outlet of the condenser and the domestic wastewater in the wastewater tank 3. The second heat exchange unit 32 can also be a coil located in the wastewater tank 3. In some embodiments, the heat pump system also comprises a first bypass branch 15 in parallel with the second heat exchange unit 32 and a first control valve 16, where the first control valve 16 is configured to selectively pass the refrigerant at the outlet of the first heat exchanger through the second heat exchange unit 32 or the first bypass branch 15 based on the temperature of the domestic wastewater stored in the wastewater tank 3 and the temperature of the refrigerant at the outlet of the first heat exchanger. For example, if the temperature of the domestic wastewater stored in the wastewater tank 3 is lower than the temperature of the refrigerant at the outlet of the condenser, the refrigerant can be passed through the second heat exchange unit 32, thereby increasing the temperature of the domestic wastewater in the wastewater tank 3 for subsequent defrosting on the one hand, and increasing the subcooling of the refrigerant on the other hand, thus further improving the overall efficiency of the heat pump system. Otherwise, the refrigerant is passed through the first bypass branch 15. In the embodiment illustrated, the first control valve 16 is a three-way valve. In alternative embodiments, the first control valve 16 may also include two independent valves respectively located on the branch where the second heat exchange unit 32 is located and the first bypass branch 15, or may employ other valves for fluid control in the art.

In some embodiments, the wastewater tank 3 further comprises a drain path 33, on which a relief valve 34 is disposed. The relief valve 34 is configured to release a portion of the domestic wastewater when the temperature of the domestic wastewater in the wastewater tank 3 is lower than a first threshold. For example, the first threshold can be taken from the range of 2 °C -8 °C, for example, the first threshold is 5 °C. When the temperature of the domestic wastewater in the wastewater tank 3 decreases, it may cause icing in the wastewater tank. In order to prevent this situation from happening, when the temperature of the domestic wastewater in the wastewater tank is relatively low, a portion of the domestic wastewater is released to lower the liquid level of the domestic wastewater stored in wastewater tank 3. At the same time, as mentioned above, the refrigerant at the outlet of the condenser in the main circuit is used to heat the wastewater in the wastewater tank 3. As the water level in the wastewater tank has decreased at this time, it is easier to heat the wastewater stored in the wastewater tank to a desired temperature so as to avoid icing in the wastewater tank 3.

In some embodiments, the wastewater heat recovery circuit 2 may further comprise an electric heater 25. In addition, the heat pump system may also have a continuous heating mode. In the continuous heating mode, the electric heater 25 is activated to heat the heat transfer medium in the wastewater heat recovery circuit, thereby maintaining a relatively high evaporation temperature of the second heat exchanger 14 to avoid frost formation therein, thus ensuring that the heat pump system to operate continuously in the heating mode without the need to perform the defrosting mode. However, activation of the electric heater 25 may increase the overall energy consumption of the heat pump system. Therefore, the continuous heating mode can be activated based on user selection or during low electricity price periods to balance comfort and usage costs. In some embodiments, the wastewater heat recovery circuit 2 also comprises a second bypass branch 23 in parallel with the first heat exchange unit 31 and a second control valve 24. The second control valve 24 is configured to selectively pass the heat transfer medium in the wastewater heat recovery circuit through the first heat exchange unit 31 or the second bypass branch 23 based on the temperature of the domestic wastewater stored in the wastewater tank 3. For example, when the electric heater 25 is activated, if the temperature of the heat transfer medium in the wastewater heat recovery circuit 2 is higher than the temperature of the domestic wastewater in the wastewater tank 3, the heat transfer medium can be passed through the second bypass branch 23. Otherwise, the heat transfer medium will pass through the wastewater tank 3 to absorb the heat from the domestic wastewater. In the embodiment illustrated, the second control valve 24 is a three-way valve. In alternative embodiments, the second control valve 24 may also include two independent valves or employ other valves for fluid control in the art. In some embodiments, the electric heater 25 can also be turned on in the aforementioned fast defrosting mode.

In some embodiments, the heat pump system also has a high-performance heating mode. In the high-performance heating mode, the wastewater heat recovery circuit 2 transfers the residual heat from the wastewater in the wastewater tank to the second heat exchanger for increasing the evaporation temperature. That is, when the main circuit operates in the heating cycle, the heat from the wastewater in the wastewater tank is transferred to the evaporator to increase the evaporation temperature. This mode can be executed when the ambient temperature is relatively high and there is no risk of frost formation in the evaporator 14, thereby improving the overall efficiency of the system; and/or this mode can be executed when the temperature of the wastewater in the wastewater tank is relatively high and the storage amount is relatively high, where at this point the residual heat of the domestic wastewater is used to improve the overall efficiency of the system.

In some embodiments, in a three-medium fluid heat exchanger, the defrosting pipeline 22 is thermally coupled with the refrigerant pipeline 141, and the three-medium fluid heat exchanger further comprises a fan for heat exchange with ambient air. Wherein, in the fast defrosting mode, the fan is turned off, allowing heat exchange between the defrosting pipeline 22 and the refrigerant pipeline 141. FIG. 1 shows an embodiment of a three-medium fluid heat exchanger, wherein the defrosting pipeline 22 and refrigerant pipeline 141 are aranged in a staggered and adjacent manner (black and white pipes in the figure), thereby enabling sufficient heat exchange between the defrosting pipeline 22 and refrigerant pipeline 141. With continued reference to FIG. 2, another exemplary second heat exchanger is shown. In the three-medium fluid heat exchanger, the defrosting pipeline 22 is wrapped around the outer side of a portion of the refrigerant pipeline 141, and heat dissipation fins 142 are disposed in the effective heat transfer section, which define the air flow path. It should be appreciated that the specific structure of the three-medium fluid heat exchanger can be different from the structure shown. For example, the defrosting pipeline 22 can be thermally coupled with the refrigerant pipeline 141 in other ways, for example, the pipelines of the two can be spiral wound, or can be formed into different parts in a plurality of microchannels, and so on.

A wastewater tank 3 comprises : an inlet port 30 for receiving domestic wastewater; a tank body for storing domestic wastewater; a first heat exchange unit 31 and a second heat exchange unit 32 disposed in the wastewater tank, where the first heat exchange unit 31 and the second heat exchange unit 32 each comprise an inlet port and an outlet port to allow a first external fluid and a second external fluid to pass through and exchange heat with the domestic wastewater in the wastewater tank 3; and a drain path 33, with a relief valve 34 disposed thereon. The wastewater tank 3 also comprises a temperature sensor and a liquid level sensor to detect the temperature and liquid level of the domestic wastewater in the wastewater tank 3. The relief valve 34 releases the domestic wastewater in the wastewater tank based on the temperature of the liquid in the wastewater tank and the domestic wastewater in the wastewater tank. In addition, the above liquid level signals and temperature signals can also be provided to the controller of the heat pump system for other control of the heat pump system based on the above signals, such as the positions of the first control valve 16 and the second control valve 24, and so on. By providing a wastewater tank in the heat pump system, domestic wastewater can be stored, and the residual heat of domestic wastewater can be utilized to accelerate the defrosting process when defrosting is needed. In addition, the tank of the wastewater tank can be made of insulation materials to prevent the loss of heat from the wastewater as much as possible. The wastewater tank can be optionally disposed indoors to prevent the loss of heat from wastewater. Alternatively, the wastewater tank can also be disposed outdoors to save indoor space.

The device according to the embodiments of the present invention effectively improves the efficiency of the heat pump system. More specifically, when the outdoor temperature is between -20 °C to -15 °C, in the fast defrosting mode, compared to the conventional reverse defrosting using a four-way valve alone, utilizing residual heat from wastewater can increase COP by at least 7%. And, compared to defrosting using pure electric heating, utilizing residual heat from wastewater can increase COP by 10% -20%. On the other hand, when equipped with an electric heater, the heat pump system can support the continuous heating mode, thereby improving comfort.

The specific embodiments described above in the specification are merely intended to describe the principles of the present invention more clearly, wherein various components are clearly shown or described to facilitate the understanding of the principles of the present invention. Those skilled in the art may, without departing from the scope of the present invention as set out in the appended claims, make various modifications or changes to the embodiments.

## Claims

1. A heat pump system, comprising:
a main circuit (1) connecting a compressor (11), a first heat exchanger (12), a throttling element (13), and a refrigerant pipeline (141) of a second heat exchanger (14), where when the heat pump system operates in a heating mode, the first heat exchanger serves as a condenser and the second heat exchanger serves as an evaporator;
a wastewater tank (3) for receiving and storing domestic wastewater;
a wastewater heat recovery circuit (2) connecting a driving device (21), a first heat exchange unit (31), and a defrosting pipeline (22) of the second heat exchanger, wherein the defrosting pipeline and the refrigerant pipeline are thermally coupled with each other, and the first heat exchange unit is thermally coupled with the wastewater tank, wherein the heat pump system has a fast defrosting mode in which the wastewater heat recovery circuit transports residual heat from wastewater in the wastewater tank to the second heat exchanger to accelerate defrosting; **characterised in that**:
the second heat exchanger is a three-medium fluid heat exchanger.

2. The heat pump system according to claim 1, wherein a second heat exchange unit (32) is further provided in the wastewater tank, where the second heat exchange unit is connected in the main circuit between the first heat exchanger and the throttling element.

3. The heat pump system according to claim 2, wherein the heat pump system further comprises: a first bypass branch (15) in parallel with the second heat exchange unit and a first control valve (16), wherein the first control valve is configured to selectively pass refrigerant at an outlet of the first heat exchanger through the second heat exchange unit or the first bypass branch based on a temperature of domestic wastewater stored in the wastewater tank and a temperature of the refrigerant at the outlet of the first heat exchanger.

4. The heat pump system according to any of claims 1-3, wherein the wastewater tank further comprises a drain path (33) with a relief valve (34) disposed thereon, where the relief valve is configured to release a portion of the domestic wastewater in the wastewater tank when the temperature of the domestic wastewater is lower than a first threshold, the first threshold being between 2 °C and 8 °C.

5. The heat pump system according to any of claims 1-4, wherein the three-medium fluid heat exchanger further comprises a fan to exchange heat with ambient air, where the fan is turned off in the fast defrosting mode.

6. The heat pump system according to any of claims 1-5, wherein the wastewater heat recovery circuit further comprises an electric heater (25), and the heat pump system further has a continuous heating mode in which the electric heater is activated to heat the heat transfer medium in the wastewater heat recovery circuit.

7. The heat pump system according to claim 6, wherein the wastewater heat recovery circuit further comprises a second bypass branch (23) in parallel with the first heat exchange unit and a second control valve (24), where the second control valve is configured to selectively pass the heat transfer medium in the wastewater heat recovery circuit through the first heat exchange unit or the second bypass branch based on the temperature of the domestic wastewater stored in the wastewater tank.

8. The heat pump system according to any of claims 1-7, wherein the heat pump system further comprises a four-way valve configured to switch between a cooling mode and the heating mode, and wherein the heat pump system further comprises a high-performance heating mode in which the four-way valve is in the same position as in the heating mode, and the wastewater heat recovery circuit transports the residual heat from the wastewater in the wastewater tank to the second heat exchanger for increasing evaporation temperature.

## Patentansprüche

1. Wärmepumpensystem, umfassend:
eine Hauptschaltung (1), die einen Kompressor (11), einen ersten Wärmetauscher (12), ein Drosselelement (13) und eine Kältemittelleitung (141) eines zweiten Wärmetauschers (14) verbindet, wobei, wenn das Wärmepumpensystem in einem Heizmodus betrieben wird, der erste Wärmetauscher als ein Kondensator dient und der zweite Wärmetauscher als ein Verdampfer dient;
einen Abwassertank (3) zum Aufnehmen und Speichern von häuslichem Abwasser;
eine Abwasser-Wärmerückgewinnungsschaltung (2), die eine Antriebsvorrichtung (21), eine erste Wärmetauscheinheit (31) und eine Abtauleitung (22) des zweiten Wärmetauschers verbindet, wobei die Abtauleitung und die Kältemittelleitung thermisch miteinander gekoppelt sind und die erste Wärmetauscheinheit thermisch mit dem Abwassertank gekoppelt ist, wobei das Wärmepumpensystem einen Schnellabtaumodus aufweist, in dem die Abwasser-Wärmerückgewinnungsschaltung Restwärme aus dem Abwasser in dem Abwassertank zu dem zweiten Wärmetauscher transportiert, um das Abtauen zu beschleunigen; **dadurch gekennzeichnet, dass**:
der zweite Wärmetauscher ein Drei-Medien-Fluid-Wärmetauscher ist.

2. Wärmepumpensystem nach Anspruch 1, wobei ferner eine zweite Wärmetauscheinheit (32) in dem Abwassertank bereitgestellt ist, wobei die zweite Wärmetauscheinheit in der Hauptschaltung zwischen dem ersten Wärmetauscher und dem Drosselelement verbunden ist.

3. Wärmepumpensystem nach Anspruch 2, wobei das Wärmepumpensystem ferner Folgendes umfasst: einen ersten Bypass-Zweig (15) parallel zu der zweiten Wärmetauscheinheit und ein erstes Steuerventil (16), wobei das erste Steuerventil dazu konfiguriert ist, basierend auf einer Temperatur von in dem Abwassertank gespeichertem häuslichem Abwasser und einer Temperatur des Kältemittels an dem Auslass des ersten Wärmetauschers Kältemittel an einem Auslass des ersten Wärmetauschers selektiv durch die zweite Wärmetauscheinheit oder den ersten Bypass-Zweig zu leiten.

4. Wärmepumpensystem nach einem der Ansprüche 1-3, wobei der Abwassertank ferner einen Abflussverlauf (33) mit einem darauf angeordneten Überdruckventil (34) umfasst, wobei das Überdruckventil dazu konfiguriert ist, einen Abschnitt des häuslichen Abwassers in dem Abwassertank freizugeben, wenn die Temperatur des häuslichen Abwassers niedriger als ein erster Schwellenwert ist, wobei der erste Schwellenwert zwischen 2 °C und 8 °C ist.

5. Wärmepumpensystem nach einem der Ansprüche 1-4, wobei der Drei-Medien-Fluid-Wärmetauscher ferner ein Gebläse umfasst, um Wärme mit Umgebungsluft zu tauschen, wobei das Gebläse in dem Schnellabtaumodus ausgeschaltet ist.

6. Wärmepumpensystem nach einem der Ansprüche 1-5, wobei die Abwasser-Wärmerückgewinnungsschaltung ferner eine elektrische Heizung (25) umfasst und das Wärmepumpensystem ferner einen kontinuierlichen Heizmodus aufweist, in dem die elektrische Heizung aktiviert ist, um das Wärmeübertragungsmedium in der Abwasser-Wärmerückgewinnungsschaltung zu erwärmen.

7. Wärmepumpensystem nach Anspruch 6, wobei die Abwasser-Wärmerückgewinnungsschaltung ferner einen zweiten Bypass-Zweig (23) parallel zu der ersten Wärmetauscheinheit und ein zweites Steuerventil (24) umfasst, wobei das zweite Steuerventil dazu konfiguriert ist, basierend auf der Temperatur des in dem Abwassertank gespeicherten häuslichen Abwassers das Wärmeübertragungsmedium in der Abwasser-Wärmerückgewinnungsschaltung selektiv durch die erste Wärmetauscheinheit oder den zweiten Bypass-Zweig zu leiten.

8. Wärmepumpensystem nach einem der Ansprüche 1-7, wobei das Wärmepumpensystem ferner ein Vierwegeventil umfasst, das dazu konfiguriert ist, zwischen einem Kühlmodus und dem Heizmodus umzuschalten, und wobei das Wärmepumpensystem ferner einen Hochleistungsheizmodus umfasst, in dem das Vierwegeventil in der gleichen Position wie in dem Heizmodus ist und die Abwasser-Wärmerückgewinnungsschaltung zum Erhöhen einer Verdampfungstemperatur die Restwärme aus dem Abwasser in dem Abwassertank zu dem zweiten Wärmetauscher transportiert.

## Revendications

1. Système de pompe à chaleur, comprenant :
un circuit principal (1) reliant un compresseur (11), un premier échangeur de chaleur (12), un élément d'étranglement (13) et une conduite de réfrigérant (141) d'un second échangeur de chaleur (14), où lorsque le système de pompe à chaleur fonctionne dans un mode de chauffage, le premier échangeur de chaleur sert de condenseur et le second échangeur de chaleur sert d'évaporateur ;
un réservoir d'eaux usées (3) destiné à recevoir et à stocker des eaux usées domestiques ;
un circuit de récupération de chaleur d'eaux usées (2) reliant un dispositif d'entraînement (21), une première unité d'échange de chaleur (31) et une conduite de dégivrage (22) du second échangeur de chaleur, dans lequel la conduite de dégivrage et la conduite de réfrigérant sont couplées thermiquement les unes aux autres, et la première unité d'échange de chaleur est couplée thermiquement au réservoir d'eaux usées, dans lequel le système de pompe à chaleur présente un mode de dégivrage rapide dans lequel le circuit de récupération de chaleur d'eaux usées transporte la chaleur résiduelle des eaux usées contenues dans le réservoir d'eaux usées vers le second échangeur de chaleur afin d'accélérer le dégivrage ; **caractérisé en ce que** :
le second échangeur de chaleur est un échangeur de chaleur à trois fluides.

2. Système de pompe à chaleur selon la revendication 1, dans lequel une seconde unité d'échange de chaleur (32) est en outre prévue dans le réservoir d'eaux usées, où la seconde unité d'échange de chaleur est connectée dans le circuit principal entre le premier échangeur de chaleur et l'élément d'étranglement.

3. Système de pompe à chaleur selon la revendication 2, dans lequel le système de pompe à chaleur comprend également : une première ligne de dérivation (15) en parallèle avec la seconde unité d'échange de chaleur et une première vanne de régulation (16), dans lequel la première vanne de régulation est configurée pour faire passer sélectivement du réfrigérant au niveau d'une sortie du premier échangeur de chaleur à travers la seconde unité d'échange de chaleur ou la première ligne de dérivation sur la base d'une température d'eaux usées domestiques stockées dans le réservoir d'eaux usées et d'une température du réfrigérant au niveau de la sortie du premier échangeur de chaleur.

4. Système de pompe à chaleur selon l'une quelconque des revendications 1 à 3, dans lequel le réservoir d'eaux usées comprend également un chemin d'évacuation (33) muni d'une soupape de décharge (34) disposée sur celui-ci, où la soupape de décharge est configurée pour libérer une partie des eaux usées domestiques contenues dans le réservoir d'eaux usées lorsque la température des eaux usées domestiques est inférieure à un premier seuil, le premier seuil étant compris entre 2 °C et 8 °C.

5. Système de pompe à chaleur selon l'une quelconque des revendications 1 à 4, dans lequel l'échangeur de chaleur à trois fluides comprend également un ventilateur pour échanger de la chaleur avec l'air ambiant, où le ventilateur est éteint dans le mode de dégivrage rapide.

6. Système de pompe à chaleur selon l'une quelconque des revendications 1 à 5, dans lequel le circuit de récupération de chaleur d'eaux usées comprend également un élément chauffant électrique (25), et le système de pompe à chaleur présente en outre un mode de chauffage continu dans lequel l'élément chauffant électrique est activé pour chauffer le fluide caloporteur dans le circuit de récupération de chaleur d'eaux usées.

7. Système de pompe à chaleur selon la revendication 6, dans lequel le circuit de récupération de chaleur d'eaux usées comprend également une seconde ligne de dérivation (23) en parallèle avec la première unité d'échange de chaleur et une seconde vanne de régulation (24), où la seconde vanne de régulation est configurée pour faire passer sélectivement le fluide caloporteur dans le circuit de récupération de chaleur d'eaux usées à travers la première unité d'échange de chaleur ou la seconde ligne de dérivation sur la base de la température des eaux usées domestiques stockées dans le réservoir d'eaux usées.

8. Système de pompe à chaleur selon l'une quelconque des revendications 1 à 7, dans lequel le système de pompe à chaleur comprend également une vanne à quatre voies configurée pour basculer entre un mode de refroidissement et le mode de chauffage, et dans lequel le système de pompe à chaleur comprend également un mode de chauffage haute performance dans lequel la vanne à quatre voies est dans la même position que dans le mode de chauffage, et le circuit de récupération de chaleur d'eaux usées transporte la chaleur résiduelle des eaux usées contenues dans le réservoir d'eaux usées vers le second échangeur de chaleur pour augmenter une température d'évaporation.
